# EUROPEAN PATENT SPECIFICATION

(11) **EP 1 841 275 B1**
(45) Date of publication and mention of the grant of the patent: **25.08.2010**
(21) Application number: 07105365.6
(22) Date of filing: 30.03.2007
(51) Int. Cl.: H04W 8/08

(54) **Roaming in wireless networks**
Roaming in drahtlosen Netzwerken
Itinérance dans des réseaux sans fil

(30) Priority: 31.03.2006 GB 0606580
(43) Date of publication of application: 03.10.2007
(73) Proprietor: Fujitsu Ltd., Kawasaki-shi, Kanagawa 211-8588 (JP)
(72) Inventor: Kueh, Victor Yong Hwa, Uxbridge, UB8 2BE (GB)
(74) Representative: Wilding, Frances Ward

(56) References cited:
- WO-A-00/13454
- US-A1- 2005 180 389
- US-B1- 6 771 604
- VICTOR YH KUEH, MICK WILSON, ADEL ROUZ FUJITSU LABORATORIES OF EUROPE LTD (FLE)UK: "Use of Context Transfer for Optimised User Plane Traffic Routing in IP-based 3G Networks" WTC 2006, [Online] 30 April 2006 (2006-04-30), - 3 May 2006 (2006-05-03) pages 1-19, XP002454401 Budapest Retrieved from the Internet: URL:http://www.wtc2006.hu/present/15689738 14_X_Kueh.pdf> [retrieved on 2006-10-10]

## Description

### FIELD OF THE INVENTION

The present invention relates generally to wireless communications networks, sometimes provided as cellular networks. Such networks can be used for telephony as well as data transfer. The invention has applications in any wireless network including mobile telephone networks operated by any provider of network services operating wirelessly.

### BACKGROUND OF THE INVENTION

Roaming is a term used to describe the use of user equipment (UE) such as a handset or other portable device outside the user's home wireless system. Thus connectivity is provided in a visited network rather than the home network where the UE is registered. The home service area is defined by the extent of the home network and its borders may coincide with geographical borders.

Roaming has always been an important feature and a key revenue generator for mobile wireless networks. With the IP-based 3G mobile networks set to roll-out in the very near future, and with its evolution definition currently underway within the 3GPP standardization, international roaming has been acknowledged as among the key functionalities to be retained in these systems.

This is particularly important because in the near future, more and more services usage is envisaged based on user-to-user communications with the emergence of IP-based applications such as mobile gaming, Push to talk over Cellular (PoC) and video conferencing. On the other hand, recent research [3] has estimated that the number of international mobile roamers (predominantly business travellers or holidaymakers) will more than quadruple between 2004 and 2010, growing from 210 million to 850 million. Given the growing market, and the current problems experienced by roaming users, such as inefficiency with international routing and roaming, it is therefore essential to have solutions to support these roaming users better. It must also be noted that optimal routing for user-to-user traffic in roaming scenarios has been identified as a key requirement/issue for the All-IP Network [4] as well as in 3GPP SAE architecture [5].

In UMTS Release 5/6/7, there are two approaches to handle roaming, depending on the choice of location for operator services control. The first approach is a home controlled roaming model and thus allows control of a session (such as a voice call or multimedia session) by the home network. In the first approach, embodied as the GPRS-based roaming model, the IP gateway (corresponding to the GPRS Gateway Support Node (GGSN in 3G)), which all the users' traffic has to traverse, resides in the home network. The second approach is a visited controlled roaming model and thus allows control of a session by the visited network. This second option, embodied as IMS based roaming, utilizes the IP gateway in the visited network to access the user services.

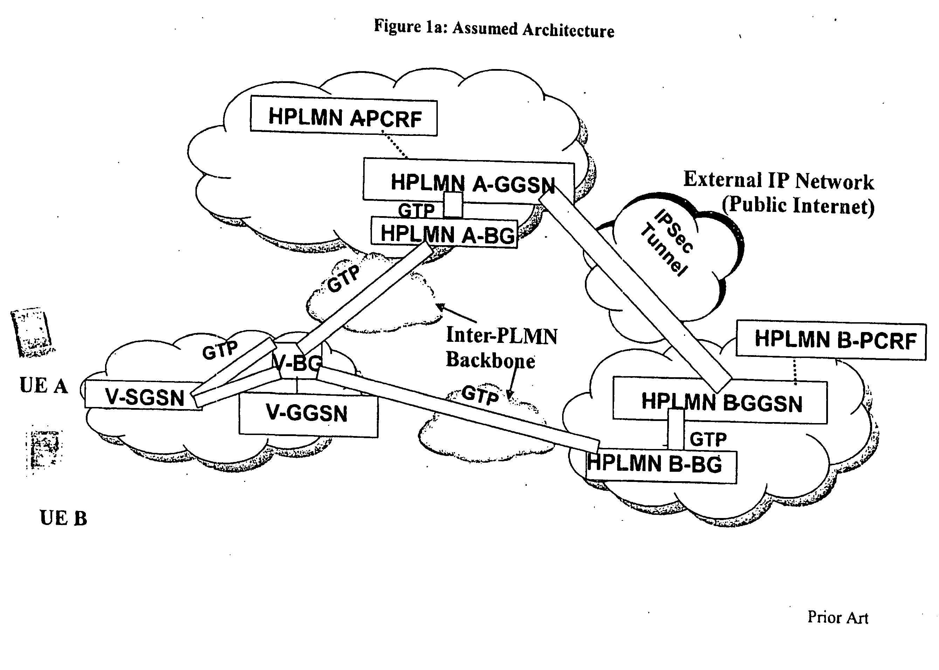

The preferred choice of some existing operators is to utilize the gateway in the HPLMN as a pre-requisite for roaming users since this enables home control of all the user services. Such a system is illustrated in Figure 1a using the home controlled roaming model.

Figure 1a shows two roaming users communicating with each other within an assumed architecture for the home controlled roaming model. For simplicity, the radio access network controller (RAN) is not shown. Note that the current notations for network entities in this and the subsequent diagrams follow the existing UMTS R7 (since these are well-known); nevertheless the architecture is applicable for SAE as well, with the replacement of SGSN/GGSN with SAE functional entities, i.e. MME/UPE/Inter AS Anchor.

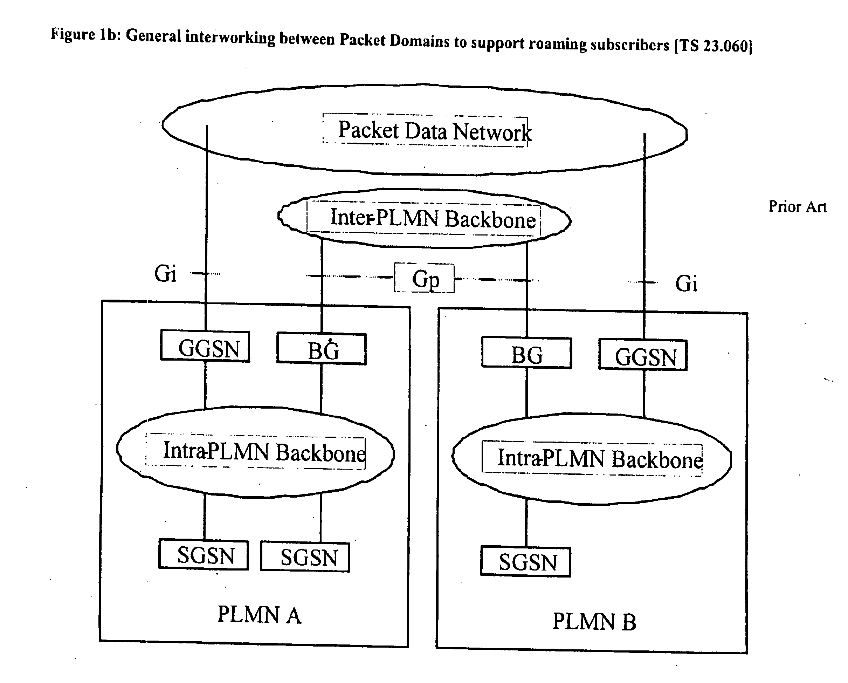

As can be seen from Figure 1a, it is assumed that user traffic (that is the "user plane" holding session content rather than signalling, which is in a "control plane") is carried over GTP tunnels within intra-PLMN, as well as between PLMNs; for the latter, the GTP tunnels traverse a well protected Inter-PLMN backbone (i.e. the network is not open to the public Internet), better known as the GPRS Roaming eXchange (GRX). The GTP processing is only performed by GTP-aware entities, i.e. SGSN and GGSN. Communication between PLMNs will need to go through the Border Gateway (BG), located at the edge of each PLMN via the Gp interface- this is in line with [1], the architecture of which is shown in Figure 1b. With regard to the communication between HPLMN A and B, it is assumed that it will go through the public IP network (e.g. Internet), although it is possible that this portion of traffic can be potentially be carried over GRX as well.

The reason that GTP (across the GRX) is used between VPLMN and HPLMN A, and between VPLMN and HPLMN B, is that it is via the Gp interface. On the other hand, an IPser tunnel is used between HPLMN A and HPLMN B because no interface is defined between GGSNs in the 3GPP standards, and GTP is only defined for the SGSN and GGSN.

To ensure security of the traffic portion going through the public IP network, it is foreseen that tunnels will be carried by IPsec tunnel - utilizing the tunneling mode option of the IPsec [2]. Note that with the current depiction of Figure 1a, the IPsec tunnel is established between the GGSNs. In this sense, it is assumed that the GGSN has some functions of the IPsec Gateway, i.e. the IPsec Gateway is collocated with the GGSN. This is not a restriction in implementation, as the IPsec Gateway can likewise be employed as a separate entity from the GGSN. Note also that from here onwards, the BG (border gateway) logical entity has been omitted in all the Figures and discussion for the sake of simplicity. It is foreseen that the BG can potentially be co-located with the GGSN; its exact physical location is implementation-dependent.

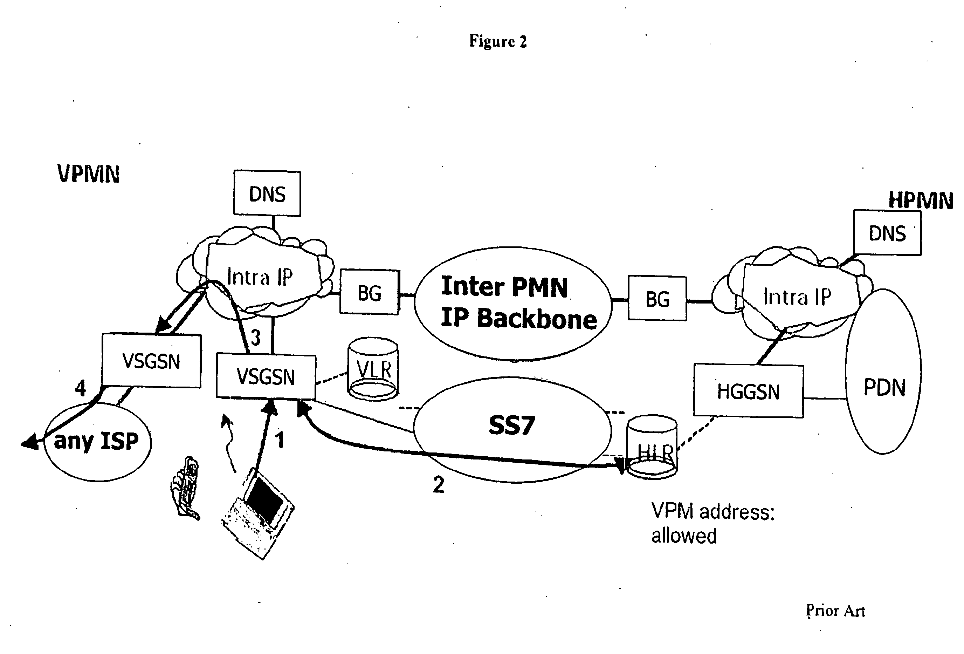

Figure 2 shows the visited controlled roaming model, embodied as IMS-based roaming in 3GPP. In this model, the IP gateway in the visited network (i.e. the visited GGSN) is utilized to handle the roaming user plane traffic. Since traffic is not forwarded/tunnelled to the home domain, it is already routed optimally between the visited domain and the peer node. Also, local breakout is possible with this model since the IP address for the UEs is assigned by the VPLMN.

However, one major disadvantage of this model is that the actual services the roaming users perceive will differ from network to network since the home network does not have direct and full control over the user traffic. Not all the HPLMN services will be available to the roaming users. For example, home non-IMS services such as peer-to-peer (P2P) streaming (e.g. VoD and IPTV applications), business IP-VPN, messaging (e.g. instant messaging, short message service (SMS), multimedia message service (MMS) cannot be provided by the home network.

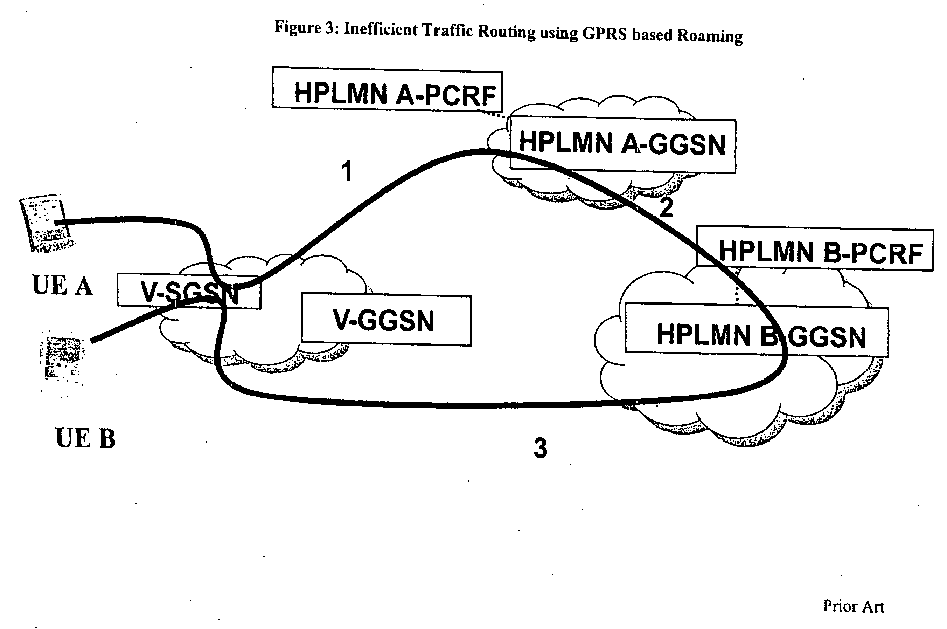

As depicted in Figure 3, the home control roaming option shown here has a different disadvantage. It suffers from inefficient traffic routing due to the tromboning effect caused by the requirement to take the traffic back to the home GGSN (the traffic needs to go through 3 different call legs). This tromboning not only consumes unnecessary bandwidth over the network backhaul, but also introduces delay to user traffic, which may be unsuitable for the transport of delay sensitive applications, such as real time video/audio services. This inefficiency does not exist with the visited network control-roaming model shown in Figure 2. Nevertheless, as stated above, the disadvantage with this visited control roaming model is that by using the GGSN in the visited network the HPLMN cannot provide home control and therefore, the services provided will differ from network to network.

US 2005/018389 discloses a roaming method in which the user plane is routed to avoid the home network of a roaming party from the outset. This document gives no details as to the control used.

It is desirable to overcome the above disadvantages in the known methods of roaming.

### SUMMARY OF THE INVENTION

The invention is defined in the independent claims, to which reference should now be made. Advantageous embodiments are set out in the sub claims.

Thus according to one aspect of the present invention there is provided a method of home-controlled roaming for a user equipment from a wireless home network in a wireless visited network, wherein the user equipment has a session with an established user plane routing and control plane routing which passes through both the home network and the visited network; the method comprising relocating the user plane to a path that excludes the home network but includes the visited network by transferring service information for the UE between a policy node which manages the service information in the home network and a policy node in the visited network, wherein the control plane remains unchanged during relocation of the user plane.

Surprisingly, it has been found that it is possible to combine some of the benefits of both home control and visited control roaming by using home network control and relocating the user plane away from the home network. Supplying information from the home network allows consistent provision of a similar or even the same level of service whether the UE is in its home network or roaming, ideally to provide a so-called "seamless service experience".

Moreover, relocation of the control plane, a critical process in any network, is advantageously avoided and the home network maintains control.

For the first time, it has become feasible to relocate data traffic for an individual session out of the "tromboning" which is typical of home network control.

With a user to user data path transferred away from the first home network, there is a reduction in congestion/overload in the networks. For example in the 3G system, the HPLMN anchor and links are less loaded. Additionally the impact of any possible failure of these parts or links to these paths is reduced. Moreover, the cost of roaming becomes lower and the backhaul load is reduced.

Also, there is a significant reduction in transfer delay for user traffic which enables transport of real-time applications. This benefit is achieved while still allowing the home network to have direct control over traffic from and to the UE. The improved service and increased availability could reduce subscriber chum and user work-around solutions due to increased user satisfaction.

Advantageously, a trigger in the visited network initiates the relocation steps. Thus the user plane relocation is network initiated and the UE is not involved in the signalling.

Preferably the method includes a further step of selectively returning to the previously established routing as required. This flexibility in returning to the established routing is facilitated by the fact that the control plane is not relocated. Therefore the optimal transmission path for user data can be switched back to conventional transmission easily without the need to switch the control plane.

A decision not to relocate can also be because some networks (e.g. PLMNs) do not support this proposed functionality. In this case, conventional routing will apply for these networks not supporting this proposed user plane relocation functionality. With this, nodes supporting the method of preferred embodiments can still interwork with nodes that do not support the proposed enhancement, hence ensuring backward compatibility with existing/legacy networks.

Advantageously, the method includes a policy check step before the transfer to check whether relocation is allowed.

The decision to activate user plane relocation may be carried out at a policy node which takes several factors into account, for example user preferences, service requirement, privacy and charging requirements and other operator policies. A policy check, preferably in the home network, and possibly, prior to that, in the visited network allows these factors to be checked and can lead to further relocation steps being discontinued if the relocation is not allowed.

Preferably, the UE IP address in the home network remains unchanged despite the relocation steps. This is an advantage because dynamic IP address allocation at the visited network is not required. Moreover, IP location privacy is achieved because the UE IP address is not used. Hence, the current location of the UE is not disclosed to the other UE or any third party.

Furthermore, there is no need for UE interaction with the present method and signalling over the air is not required for its implementation.

This is in contrast to 3GPP TS 23.060 V6.11.0: "General Packet Radio Service (GPRS); Service description - Stage 2," December 2005 [1] which requires interaction between the SN and UE for radio access bearer modification.

In preferred embodiments, the relocation steps include a relocation request stage, a policy check stage, a context information transfer stage and a user plane relocation stage. The first three of these relate to information supply and the fourth stage to transfer of the user plane. Such relocation steps may be carried out using signalling between the core network nodes only in the visited and the home networks. Thus there is no signalling to and from the UE involved in relocation.

Preferably, each network includes a serving node, a gateway node and a policy node. These nodes or entities are embodied as the SGSN, GGSN and PCRF in 3G. In the evolved 3GPP network, the equivalents of the SGSN/GGSN are the UPE/MME. The Inter AS Anchor defined in the evolved 3GPP system may also be involved. In other systems, these nodes (or elements or entities) may well be combined or the functions of a single node may be separated into different entities. For example, the serving node and gateway node may be combined as a single gateway node and signalling between the serving node and gateway node described in the following may be internal to the single gateway node. Nevertheless, the skilled reader will appreciate the equivalent parts in alternative communication systems.

Preferably, the relocation request stage includes a relocation required message from the visited serving node (in the visited network) to the visited gateway node (in the visited network) followed by a request policy/charging rules message from the visited gateway node (in the visited network) to the visited policy node (in the visited network) and then a relocation request from the visited policy node (of the visited network) to the home policy node (of the home network).

Preferably, the policy check is carried out by the policy node in the home network. Preferably an interface is provided between the policy node in the home network and the policy node in the visited network.

Assuming that the relocation request is allowed, the context information transfer stage preferably includes a relocation response from the home policy node to the visited policy node, a context transfer request from the visited policy node to the home policy node, a transfer of context data from the home policy node to the visited policy node and provision of policy data from the visited policy node to the visited gateway node. The policy data may reflect the context data transferred from the home policy node and may additionally or alternatively reflect some aspects of the visited network policy.

Finally, the user plane relocation stage preferably includes a request from the visited gateway node to the home gateway node to relocate user context and a response from the home gateway node to the visited gateway node, followed by a request from the visited gateway node to the visited serving node to update the context and a response from the visited serving node to the visited gateway node.

The session may be between the first UE and a service (or second UE) in the visited network, in which case the transfer stage may transfer the user plane away from the first UE network to entirely within the visited network.

Alternatively when the session is between the first UE and a second UE from a second home network, the established routing may pass through both home networks. Here the method preferably includes relocation away from the second home network of the second UE using relocation steps corresponding to the relocation steps for the first UE. Thus, for example, there is provided a method of improved roaming for a first UE from a first wireless home network and a second UE from a second wireless home network in a visited wireless network comprising the steps of relocating a session having an established user plane which passes through both home networks and the visited network by supplying information for the first UE from the first home network and for the second UE from the second home network to the visited network and transferring the user plane away from one or both home networks. Either home network may not allow the relocation, following a policy check.

Advantageously, a first transfer step or user plane relocation stage transfers the user plane away from the first home network to run through the visited network and the second home network only and a second transfer step transfers the user plane away from the second home network to be entirely within the visited network.

Here the first user plane relocation stage may include transfer of an IPsec tunnel and a GTP tunnel (as shown in Figure 1). The GTP tunnel is transferred to within the visited network and the IPsec tunnel to between the second home network and visited network (rather than between the two home networks) using the steps set out above.

Transfer of the IPsec tunnel may include a request from the home network gateway node to the second home network gateway node to update the tunnel address, creation of a new IPsec tunnel between the second home network gateway node and visited network gateway node and a response from the second home network gateway node to the first home network gateway node that the tunnel address has been updated. Here, it is assumed that the IPsec gateways are collocated with the network gateway nodes but this is implementation dependent.

The second user plane relocation stage may include the transfer of the GTP tunnel between the second home network and the visited network to within the visited network and removal of the IPsec tunnel between the second home network and visited network. Transfer of the GTP tunnel may follow the steps listed above for the first user plane relocation stage. Where both visiting UEs are from the same home network, the first and second user plane relocation stage both include transfer of a tunnel between the home and visited networks to entirely within the visited network.

The first UE and second UE relocation steps may take place substantially in parallel. Here, the policy node may determine whether relocation of the user plane away from the first and second home networks takes place in parallel by sending the relocation requests to both home networks at the same time or waiting for the relocation to have completed in the first home network before sending the relocation request to the second home network. The user plane relocation stage requires signalling between the home networks to relocate the tunnel between these networks. For example, in the IPsec tunnel transfer detailed above, one home network must request the tunnel address update and the other must respond. Thus there is a possibility of race-condition signalling. Therefore a mechanism may be provided to avoid this; such mechanisms are known in the art.

Preferably, the trigger that starts off the relocation process acts when the first and second UEs are in the same session and within the same visited network, or service area of the visited network.

The present invention also relates to a method in the visited wireless network for improved roaming of the first user equipment and the relocation comprises steps in the visited network for receiving the service information from the home network; and transferring the user plane connection away from the home network.

Method steps in the visited network correspond to method steps carried out in the visited network as described above for the overall method.

In particular, the relocation request stage includes sending a relocation required message from the visited serving node to the visited gateway node, sending a request policy/charging rules message from the visited gateway node to the visited policy node and sending a relocation request from the visited policy node to the home network.

Preferably the context information transfer stage includes receiving a relocation response from the home policy node at the visited policy node, sending a context transfer request from the visited policy node to the home policy node, receiving a transfer of context data from the home policy node at the visited policy node and providing policy data from the visited policy node to the visited gateway node.

Preferably the user plane relocation stage includes sending a request from the visited gateway node to the home gateway node to relocate user context and receiving a response from the home gateway node at the visited gateway node, followed by sending a request from the visited gateway node to the visited serving node to update the user context and receiving a response from the visited serving node at the visited gateway node.

As before, the session may be between the first UE and a service or second UE of the visited network, in which case the transfer step may transfer the user plane from the first UE home network to entirely within the visited network.

Alternatively, the session may be between the first UE and a second UE from a wireless network other than the visited network. Where the second UE is from a second home network and both UEs are roaming, the established routing may pass through both home networks and the method may include relocation away from the second UE home network using relocation steps corresponding to the relocation steps as defined for the first UE.

The first UE and second UE relocation steps may take place substantially in parallel. The trigger may act when the first and second UEs are in the same session and within the same visited network. In particular, the trigger may act when both UEs are within the same service area in the visited network and belong to the same session.

According to an aspect of the present invention there is also provided a network having means/functionality carrying out the functions previously described for the visited wireless network in use. The network may include a serving node, a gateway node and a policy node.

Preferably, there is provided a trigger in the visited wireless network which triggers a method of improved roaming for a first UE from a first wireless home network and a second UE from a second wireless home network. The trigger is activated when both UEs are within the same service area in the visited network and belong to the same session. The trigger is preferably held in the serving node of the visited network.

According to a further aspect of the present invention there is provided a method in the wireless home network for improved roaming of the user equipment and the relocation comprises steps in the home network for: supplying the service information to the visited network; and transferring the user plane connection away from the home network.

Method steps in the home network correspond to the method steps carried out for the home network described above for the overall method.

In particular, the context information transfer stage may include sending a relocation response from the home policy node to the visited policy node, receiving a context transfer request from the visited policy node at the home policy node and transferring context data from the home policy node to the visited policy node.

Preferably the user plane relocation stage includes receiving a request from the visited gateway node at the home gateway node to relocate user context and sending a response from the home gateway node to the visited gateway node.

According to a further aspect of the present invention there is also provided a home network having means/functionality carrying out the relocation steps as defined for the home network in use. The home network may include a serving node, a gateway node and a policy node.

Preferably, there is provided a policy node in the visited or the home wireless network which has the capability to communicate with a policy node of another wireless network to convey information needed for the relocation of a roaming user plane to transfer context to the other wireless network.

Preferably, there is provided a gateway node in the visited or the home wireless network which has the capability to communicate with a gateway node of another wireless network to exchange messages related to relocating context of a roaming user plane.

Preferred features of the present invention will now be described, purely by way of example, with reference to the accompanying drawings, in which:
Figure 1a is a schematic representation of the user plane in a prior art home control roaming method embodied as GPRS roaming;
Figure 1b is a schematic illustration of the general interworking between packet domains according to [1];
Figure 2 is a schematic representation of signal flow in a prior art visited control roaming method embodied as IMS roaming;
Figure 3 is a schematic representation of the user plane routing using prior art home control roaming;
Figure 4 is a schematic representation of relocation according to an embodiment of the present invention;
Figure 5 is a schematic illustration of an optimal relocation according to an embodiment of the present invention;
Figure 6 is a schematic illustration of the method according to embodiments of the invention;
Figure 7 is a diagram of the information flow to relocate the user plane for two UEs in a preferred embodiment of the present invention;
Figure 8 shows the information flow of steps 9 and 17 of Figure 7 in more detail for the PDP context relocation; and

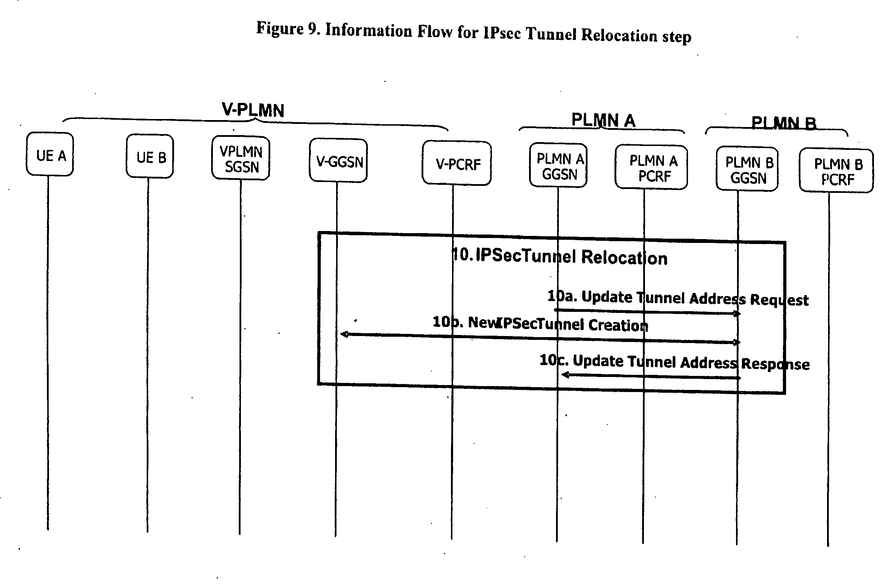

Figure 9 shows the information flow for the IPsec tunnel relocation step 10 in Figure 7.

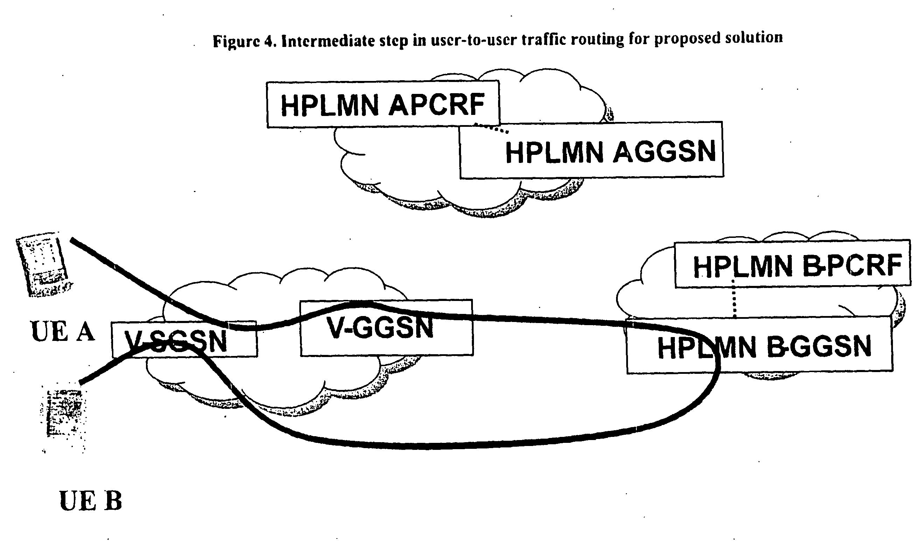

Embodiments of the invention provide a method to enhance the home control (or 'home routed traffic') roaming model so as to enable optimised user plane traffic routing. This is achieved through the relocation of the user plane away from the home network and ideally only within the visited network where the roaming users in communication are currently located. Figure 4 shows routing between UE A and UE B which has been transferred away from the home network A. This may be an intermediate step so that the user plane is subsequently transferred to entirely within the visited network. However, alternatively, the home network for UE B, HPLMN B may refuse to transfer the user plane away from the home network and therefore the routing shown may be the final solution.

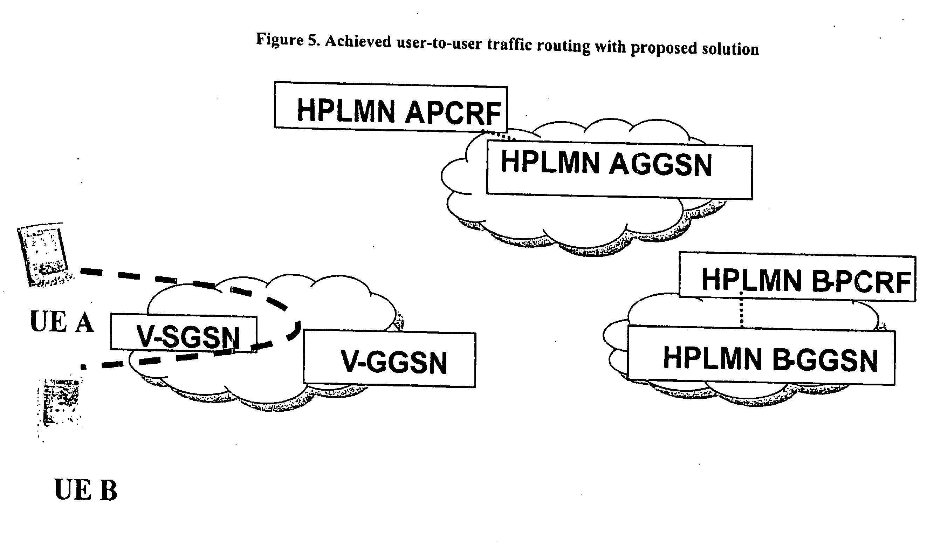

An optimised traffic routing allowed by both home networks is shown by Figure 5, in which case Figure 4 can be seen to show an intermediate traffic routing (taking Figure 3 as a starting point).

The diagrams illustrate an embodiment in which both UEs are roaming. However, the skilled reader will appreciate that the invention is also applicable where there is a single roaming UE connected to a local UE or local service in the visited network. In this case, the routing will initially be through the visited network and the home network for that roaming UE (as shown in Figure 4 if UE A is assumed to be a local UE or local service within the visited network).

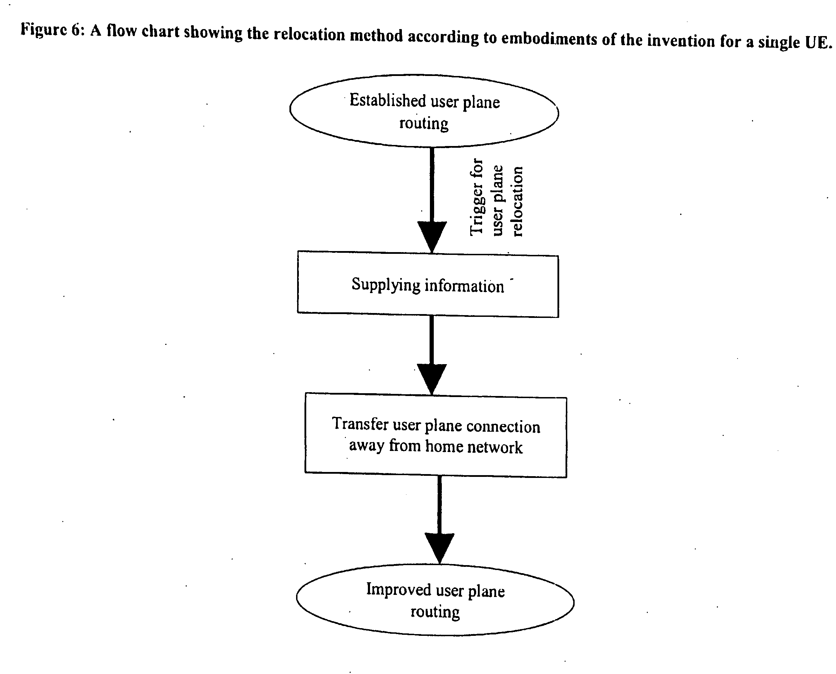

Figure 6 shows the relocation method of embodiments of the invention. Initially there is an established user plane routing which includes routing through the home network.

There is a trigger in the visited network which indicates that user plane relocation could be applicable. This trigger may be, for example, dependent on the visited network recognizing that the user is roaming using a home control roaming method. If the session in question is between two UEs which are both roaming, the trigger may depend on the two UEs being in the same Service Area in the PLMN.

In order for the user plane to be moved away from the home network with no substantial loss of service, service information of the home network may be required. Therefore the next stage is the supply of this information from the home network to the visited network, Subsequently the user plane connection is transferred away from the home network leading to an improved user plane routing while maintaining the control plane in the home network.

Where there are two roaming UEs involved in this method, the user plane passes through both home networks. Supplying service information for the first UE allows the user plane to be transferred away from the home network for that UE with no loss of service. In this case the user plane will now run between the first UE in the visited network, across to and back from the second home network and back through the visited network to the second UE. In a further transfer step, the user plane is transferred away from the second home network to be entirely within the visited network.

In each case, for the transfer step, a "dog-leg" of two tunnels between networks is removed. If the routing is already to one home network only (e.g. only one of the users is roaming or the user plane has already been transferred away from one home network) the transfer away from the home network leads to the user plane being routed entirely within the visited network.

One common situation is that two UEs from the same home network are roaming within a single visited network. Here, each UE will have a separate relocation request to relocate the tunnel from its home network to within the visited network.

To ensure consistent provision of user service experience (seamless service experience), service information such as the related QoS attributes and policy information as well as the charging information is transferred from the home network to the visited network, for example from each of the respective network elements or nodes in HPLMN to the network element in VPLMN in a 3G system. This information will then be subsequently conveyed to the gateway in VPLMN so that it can execute the right resource allocation and rating, in accordance with the previously defined configuration by the HPLMNs.

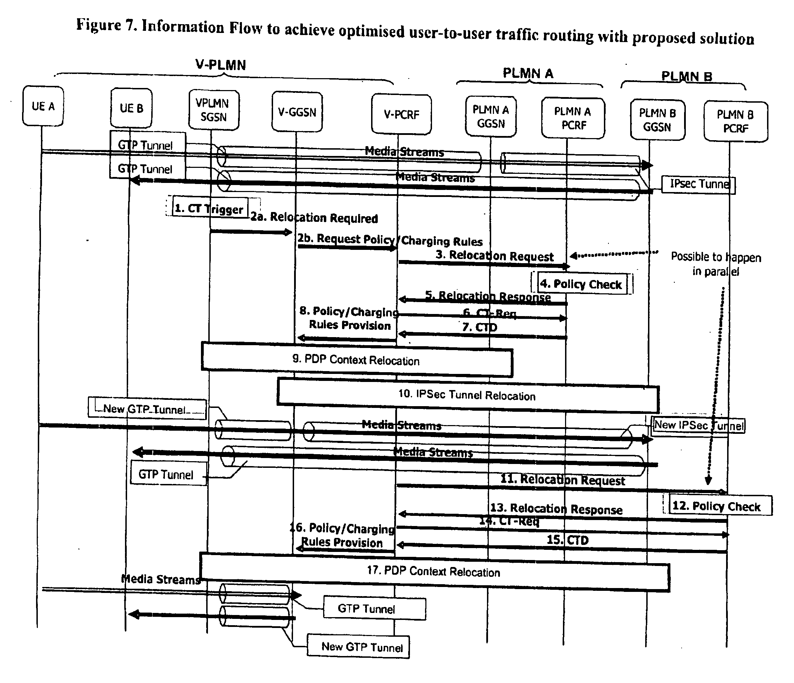

A detailed procedure for the proposed solution to achieve optimised user-to-user traffic routing in GPRS can be explained by the embodiment shown in Figure 7. As noted above, the method is suitable for implementation using different technologies.

The user traffic (or plane) is currently not routed optimally between user A and B although they are located in the same PLMN (refer to Figure 3 for the routing) (note for the current depiction, it is assumed that both user A and B are served by the same SGSN in VPLMN).

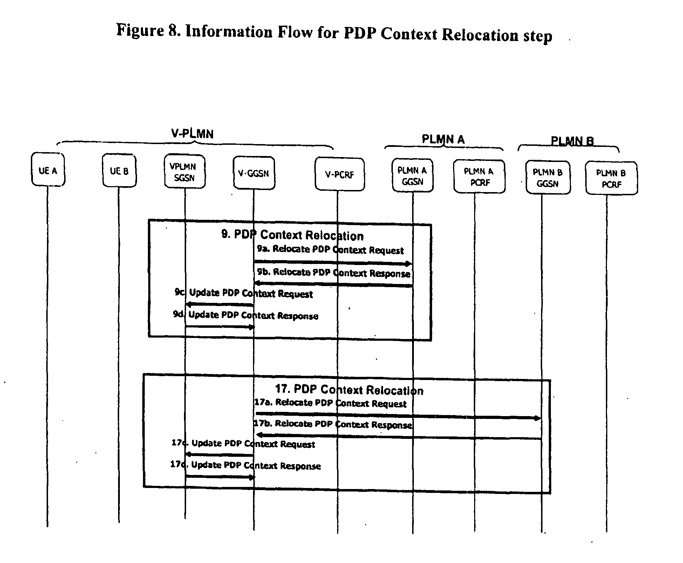

The relocation method has the following steps:
1. The relocation of the user data path is initiated by a trigger in the network. With two visiting UEs, this is achieved when the network (SGSN) identifies that both users are:
   i. within the same Service Area in the PLMN; and
   ii. belong to the same session
      To determine that the UEs are within the same Service Area in the PLMN, the Tunnel Endpoint Identifier (TEID) [6] can possibly be used; while the session ID is used to identify that both UEs are in the same communicating session; one example of such ID which can be used is the Transaction Identifier [7]. Note that UE IP address cannot be utilised in the existing GPRS system, which does not use UE IP address for packet routing. Even if it is used, UE IP address will not be of much help since it is assigned by HPLMN.
2. V-SGSN sends a Relocation Required message to the V-GGSN to start the relocation process. Identities pertaining to the UEs are included (e.g. IMSI/MSISDN). When the V-GGSN determines that the PCC authorization is required, it requests the subscriber's authorization, allowed service(s) and Policy and Charging Rules information from the proxy PCRF in VPLMN. Before step 3, the V-PCRF may also check whether the visited network is set to anchor user traffic locally.
3. The PCRF in the VPLMN forwards the Relocation Request message to the home network to check if local breakout of traffic is possible within the VPLMN of the associated UEs in session. With this, identities pertaining to the UEs are included (e.g. IMSI/MSISDN)
4. The home PCRF checks whether its UE is allowed to have traffic to be broken out locally in the VPLMN. In making this decision, it checks with its local (operator) policy, which among others include privacy and charging requirements, and service requirements (obtained from the Application Function (AF). In addition, the home PCRF may consult the HSS and/or the Subscription Profile Repository (SPR) which contains all subscriber/subscription related information, for e.g. user preferences. (Note: The HSS and SPR are not shown in Figure 7 for simplicity. The correlation/relation of SPR with the HSS is yet to be defined within 3GPP).
5. The home PCRF sends a Relocation response to the visited/proxy PCRF in the VPLMN to inform its decision of the relocation request (it is assumed herein that this request is allowed by the respective HPLMN).
6. Upon confirmation that the relocation of traffic request to the VPLMN is possible, the V-PCRF sends a request to the home PCRF for the necessary information required for traffic control in the VPLMN. This context request can potentially use the Context Transfer Request (CT-Req) message defined in [8].
7. Home PCRF transfers the required information, which potentially may include rule identifier, service data flow filters (for service data flow detection), and its precedence, service identifier, charging key, charging method, measurement method, reporting method/level, QoS settings/limits (e.g. QoS class/priority, bit rate) for the set of IP flow(s) and restrictions on the individual IP flow(s) for the session between UE A and B. The information transferred is implementation dependent. This context information transfer can potentially use the Context Transfer Data (CTD) message defined in [8].
8. Based on the received information from the home PCRF, the V-PCRF sends the policy and charging rules to the V-GGSN, which will enforce the decision. Note that the decision could also be potentially based on the policy and charging rules in the roaming network (VPLMN) if the VPLMN decides to enforce its own policy and charging rules, which may be different from the ones in HPLMN.
9. Upon receiving the Bearer Authorization Response from the V-PCRF, the V-GGSN sends a Relocate PDP Context Request message to the GGSN in PLMN A to initiate the PDP context (tunnel) relocation from GGSN in PLMN A to GGSN in VPLMN (Figure 8). This request will contain the credentials to inform the HPLMN A GGSN that the V-GGSN has the permission from the home network to 'anchor' the UE A traffic for this session. Only the user plane relocation (GTP-U tunnel) takes place - the control plane connection (GTP-C tunnel) remains unchanged (i.e. GTP-C tunnel is not moved). PLMN A GGSN sends a response to acknowledge this relocation. The V-GGSN then sends an Update PDP Context Request message to the V-SGSN as per [1]. The V-SGSN acknowledges this by sending the Update PDP Context Response message. Note that compared to [1], the necessary interaction between the SGSN and UE (for the radio access bearer modification) is not required since existing radio access bearer between SGSN to UE can be reused. There is no need for UE interaction and hence, signalling over the air is not required.
10. Given that PLMN GGSN A already knows that the user data path (GTP tunnel) needs to be relocated to VPLMN (it has received the Relocate PDP Context Request message from V-GGSN), it sends an Update Tunnel Address Request message to PLMN B GGSN to inform PLMN B GGSN of the new endpoint of the IPsec tunnel that needs to be established for the IPsec tunnel relocation (from PLMN B-PLMN A to PLMN B-VPLMN). With the current depiction of the assumed architecture (Figure 1), it is assumed IPsec Gateway is collocated with GGSN. PLMN B GGSN then initiate message exchange with the V-GGSN for the IPsec tunnel creation (tunnel mode) as per [2]. Upon successful creation of this new tunnel between PLMN B GGSN and V-GGSN, PLMN B GGSN sends an Update Tunnel Address Response to inform PLMN A GGSN that the IPsec tunnel relocation is successful. This acknowledgement could also prompt PLMN GGSN A to tear down the old tunnel between PLMN A with PLMN B by deleting their security association (SA), if it is no longer used.
   Upon successful PDP context relocation (step 9) and IPsec tunnel relocation (step 10), the user plane traffic for UE A is now localised within VPLMN (Figure 7).
11.-16.These steps concerning UE B are similar to steps 3-8 (explained above for UE A). Note that steps 11-16 can possibly happen before steps 3-8 or they can happen in parallel.
   In both cases, V-PCRF will initiate the signalling once it receives the Request Policy/Charging Rules message from V-GGSN. Note that it is possible that the relocation request may be rejected by each of the UE's HPLMN due to each own PLMN policy. If either PLMN does not approve the relocation of the user plane, the invention still works albeit only sub-optimum routing is achieved - e.g. if PLMN B does not allow the relocation of its traffic to VPLMN, this does not interfere with the optimised routing for the UE A traffic portion (Figure 3).
   When steps 11 to 16 occur in parallel to steps 3 to 8, there is always a possibility that a race-condition signalling will occur with respect to the IPsec tunnel relocation. There are mechanisms which can avoid this, the exact details of which are beyond the scope of this invention. If no mechanism is in place then, assuming the best case, there will not be any IPsec tunnel relocation, and in the worse case, there will be two IPsec tunnels created (i.e. between PLMN B with VPLMN and between PLMN A and VPLMN). In all cases, no impact to the routing of the UE A-UE B traffic is foreseen, as the traffic would have been routed optimally entirely within the VPLMN by then.
17. This step is similar to step 9 with the PDP context (GTP-U tunnel) being relocated from PLMN B GGSN to V-GGSN
   With the UE A-to-UE B traffic now localised within the VPLMN, the IPsec tunnel between the PLMN B and VPLMN (established in step 10) can be torn down, if it is no longer used.

If both UEs are from the same home network, the V-PCRF still sends two relocation requests. The difference in the method is that there is no IPsec tunnel relocation, so only PDP context relocation is required and step 10 is omitted. The method may, however, include creation of an IPsec tunnel as explained in the following:
It is assumed UE A and UE B are from network B with the user plane shown in figure 4. UE A relocates first. The GTP tunnel from V-SGSN to HPLMN B-GGSN becomes a GTP tunnel within the visited network, but we need to create a tunnel between the visited network and HPLMN B (to maintain the connection with UE A).

Hence there is no advantage in user plane re-routing of a single user, as effectively the GTP tunnel across PLMNs is replaced with an IP tunnel (in this case an IPsec tunnel for security reasons).

However, the optimal routing is achieved as before when both roaming UEs are relocating; if these relocations happen in parallel, then there is no need for creation of an IPsec tunnel.

An important part of the invention embodiments is the triggering mechanism that initiates the relocation of the data path (step 1). Based on the proposed method, the criteria to trigger the path relocation are simple to implement, and do not require additional signalling or external measurement, but are based on readily available/existing identifications in 3G network. Furthermore, since the user plane relocation trigger is network-initiated, any possible 'malicious attacks' by third party by sending 'false' relocation is minimized. Also, the proposed mechanism does not need UE interaction, and hence signalling over the precious and security-susceptible radio interface is avoided.

The invention embodiments introduce new capabilities to the network entities, i.e. the SGSN, GGSN and PCRF, as well as new interfaces in the core network between the two PCRFs and the two GGSNs (policy nodes and gateway nodes). Thus, a new interface between the visited PCRF in the VPLMN and the home PCRF is introduced. Via this interface, 4 new messages are exchanged between the PCRFs (appearing in steps 3, 5, 6, 7, 11, 13, 14, 15). As mentioned previously, the CT-Req and CTD messages can potentially be based on the ones defined in the IETF [8].

In step 2a, the Relocation Required is a new message introduced in the SGSN - it is similar to the existing request for bearer establishment (e.g. Create PDP Context Request/Update PDP Context Request), but instead specific for bearer relocation purposes.

Steps 9a and 9b (likewise, steps 17a and 17b) introduce new functionality to the GGSN with signalling exchanges between the GGSNs over GTP-C (for the PDP Context relocation). Note that with the existing standards, signalling exchange between GGSNs does not exist. As for the Update PDP Context Request and Update PDP Context Response, it is envisaged that the messages defined in [1] can be used. The PDP context relocation (steps 9 and 17) does not require V-PLMN to assign a new IP address to either UE A or B with both UEs still use their existing IP address. With this, the current location of UEs are not disclosed to each other (or to external parties), and hence IP location privacy, which is becoming a more and more important requirement in next generation mobile network, is maintained.

The messages involved for IPsec tunnel relocation (step 10) are also new with the invention embodiments - this will be extra feature to the GGSN, if the IPsec Gateway is assumed to be collocated with the GGSN.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality of the wireless network entities embodying the present invention. The invention may also be embodied as one or more device or apparatus programs (e.g. computer programs and computer program products or a suite of one or more computer programs) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

### References

[1] 3GPP TS 23.060 V6.11.0: "General Packet Radio Service (GPRS); Service description - Stage 2," December 2005
[2] S. Kent and K. Seo, "Security Architecture for the Internet Protocol," Request for Comments 4301, IETF, December 2005
[3] http://www.informatm.com/marlin/20001001561/INDEX
[4] 3GPP TS 22.258 V7.0.0: "Service Requirements for the All-IP Network (AIPN) - Stage 1," December 2005
[5] 3GPP TR 23.882 V0.b.0: "3GPP System Architecture Evolution: Report on Technical Options and Conclusions." February 2006
[6] 3GPP TS 29.060 V7.0.0: "GPRS Tunnelling Protocol (GTP) across the Gn and Gp interface (Release 7)," December 2005
[7] 3GPP TS 24.007 V7.0.0: "Mobile radio interface signalling layer 3; General aspects (Release 7)," September 2005
[8] J. Loughney (Ed.), M. Nakhjiri, C. Perkins and R. Koodli, "Context Transfer Protocol (CXTP)," Request for Comments 4067, IETF, July 2005

### Acronyms

- 3GPP: 3^{rd} Generation Partnership Project
- AF: Application Function
- AP: Access Point
- BG: Border Gateway
- CTD: Context Transfer Data
- CT-Req: Context Transfer Request
- GGSN: GPRS Gateway Support Node
- GPRS: General Packet Radio Service
- GTP: GPRS Tunnelling Protocol
- HLR: Home Location Register
- HPLMN: Home Public Land Mobile Network
- HSS: Home Subscriber Server
- IMSI: International Mobile Subscriber Identity
- Inter AS Anchor: Inter Access Anchor
- MME: Mobility Management Entity
- MSISDN: Mobile Subscriber ISDN Number
- PCRF: Policy Charging Rules Function
- PDP: Packet Data Protocol
- PLMN: Public Land Mobile Network
- PoC: Push to Talk over Cellular
- QoS: Quality of Service
- RAN: Radio Access Network
- RNC: Radio Network Controller
- RNS: Radio Network Subsystem
- SAE: 3GPP System Architecture Evolution
- SGSN: Serving GPRS Support Node
- SMS: Short Message Service
- SN: Signalling Node
- SPR: Subscription Profile Repository
- SS7: Signalling System 7 - high speed signalling protocol for land line
- TAP: Billing protocol developed by GSM assoc. CSM/GMTS
- TEID: Tunnel Endpoint Identifier
- UE: User Equipment
- UMTS: Universal Mobile Telecommunications System
- UPE: User Plane Entity
- VLR: Visitors Location Register
- VPLMN: Visited Public Land Mobile Network
- V-SGSN: Visited Serving GPRS Support Node

## Claims

1. A method of roaming for a user equipment (UE) from a wireless home network (HPLMN A) in a wireless visited network (V-PLMN), wherein the user equipment has a session with an established user plane routing and control plane routing which passes through both the home network and the visited network;
the method comprising:
relocating the user plane to a path that excludes the home network but includes the visited network by transferring service information for the user equipment between a policy node (PLMN A PCRF) which manages the service information in the home network and a policy node (V-PCRF) in the visited network, wherein the control plane remains unchanged during relocation of the user plane.

2. A method according to claim 1 wherein a trigger in the visited network (V-PLMN) initiates the relocation steps.

3. A method according to any of the preceding claims further including a step of selectively returning to the previous established routing as required.

4. A method according to any of the preceding claims including a policy check step before the transfer to check whether relocation is allowed.

5. A method according to claim 4 wherein the policy check is carried out in the home network (HPLMN A).

6. A method according to claim 5 wherein an initial policy check is carried out by the visited network (V-PLMN).

7. A method according to any of the preceding claims wherein the user equipment IP address in the home network (HPLMN A)remains unchanged despite the relocation steps.

8. A method according to any of the preceding claims wherein the relocation steps include a relocation request stage, a policy check stage, a context information transfer stage, and a user plane relocation stage.

9. A method according to any of the preceding claims wherein the relocation steps are carried out using signalling between core network nodes only in the visited and home networks and wherein each network includes a serving node (SGSN), a gateway node (GGSN) and a policy node (PCRF).

10. A method according to claim 8 and 9 wherein the relocation request stage includes a relocation required message from the visited serving node (V-SGSN) to the visited gateway node (V-GGSN) followed by a request policy/charging rules message from the visited gateway node (V-GGSN) to the visited policy node (V-PCRF) and then a relocation request from the visited policy node (V-PCRF) to the home policy node (HPLMN A PCRF).

11. A method according to claim 8 and 9 or 8 and 10 wherein the policy check stage is carried out by the home policy node (HPLMN A PCRF).

12. A method according to claim 8 and any of claims 9 to 11 wherein the context information transfer stage includes a relocation response from the home policy node (HPLMN A PCRF) to the visited policy node (V- PCRF), a context transfer request from the visited policy node to the home policy node (HPLMN A PCRF), a transfer of context data from the home policy node (HPLMN A PCRF) to the visited policy node (V- PCRF) and provision of policy data from the visited policy node (V- PCRF) to the visited gateway node (V- GGSN).

13. A method according to any of claim 8 and any of claims 9 to 12 wherein the user plane relocation stage includes a relocate user context request from the visited gateway node (V- GGSN) to the home gateway node (HPLMN A GGSN) and a response from the home gateway node (HPLMN A GGSN) to the visited gateway node (V- GGSN), followed by an update user context request from the visited gateway node (V- GGSN) to the visited serving node (V- SGSN) and a response from the visited serving node (V- SGSN) to the visited gateway node (V- GGSN).

14. A method according to any of the preceding claims wherein the user equipment (UE A) is a first user equipment and the session is between the first user equipment (UE A) and a service or second user equipment (UE B) of the visited network (V-PLMN) and wherein the transfer step transfers the user plane connection away from the first user equipment home network to entirely within the visited network.

15. A method according to any of the preceding claims wherein the user equipment (UE A) is a first user equipment and the session is between the first user equipment (UE A) and a second user equipment (UE B) from the same home network and the transfer step includes transferring the user plane away from the home network to entirely within the visited network.

16. A method according to any of claims 1-13 wherein the home wireless network is a first home wireless network and user equipment (UE A) is a first user equipment and the session is between the first user equipment (UE A) and a second user equipment (UE B) from a second home network and both user equipments are roaming.

17. A method according to claim 16 wherein the established routing passes through both home networks and the method includes relocation away from the second home network of the second user equipment (UE B) using relocation steps corresponding to the relocation steps as defined for the first user equipment (UE A) in any of the preceding claims.

18. A method according to claim 16 or 17 wherein a first transfer step transfers the user plane connection away from the first home network to run through the visited network and the second home network only and a corresponding second transfer step transfers the user plane connection away from the second home network to be entirely within the visited network.

19. A method according to claims 13 and 18 wherein the user plane relocation stage further includes a request from the home network gateway node (HPLMN A GGSN) to the second home network gateway node (HPLMN B GGSN) to update a tunnel address, creation of a new tunnel between the second home network gateway node and visited network gateway node (V-GGSN) and a response from the second home network gateway node (HPLMN B GGSN) to the first home network gateway node (HPLMN A GGSN) that the tunnel address has been updated.

20. A method according to any of claims 15 to 19 wherein the first user equipment (UE A) and the second user equipment (UE B) relocation steps take place substantially in parallel.

21. A method according to claim 2 and any of claims 15 to 20 wherein the trigger acts when the first and second user equipments are in the same session and within the same visited network.

22. A method according to claim 1 wherein the method is carried out in the home wireless network for roaming of the user equipment (UE A) and the relocation comprises steps in the home network for supplying the service information to the visited network; and transferring the user plane connection away from the home network.

23. A method according to claim 1 wherein the method is carried out in the visited wireless network for roaming of the user equipment (UE A) and the relocation comprises steps in the visited network for receiving the service information from the home network; and transferring the user plane connection away from the home network.

24. A wireless home network allowing roaming for a user equipment from the wireless home network in a wireless visited network wherein the user equipment has a session with an established user plane routing and control plane routing for the user equipment which passes through both the home network and the visited network, comprising: home network relocating means operable to relocate the user plane to a path that excludes the home network but includes the visited network, including a policy node (PCRF) operable to supply service information for the UE to the visited network; and a gateway node (GGSN) operable to transfer the user plane connection away from the home network, wherein the control plane remains unchanged during relocation of the user plane.

25. A wireless visited network (V-PLMN) allowing roaming of a user equipment from a wireless home network in the wireless visited network, wherein the user equipment has a session with an established user plane routing and control plane routing which passes through both the home network and the visited network comprising: visited network relocating means operable to relocate the user plane to a path that excludes the home network but includes visited network, including; a policy node (V-PCRF) operable to receive information for the user equipment from the home network; and a gateway node (V-GGSN) operable to transfer the user plane connection away from the home network, wherein the control plane remains unchanged during relocation of the user plane.

26. A wireless visited network according to claim 25, further comprising a trigger which triggers improved roaming for the user equipment from the wireless home network and a second user equipment from the wireless home network or a second wireless home network, wherein the trigger is activated when both user equipments are within the same service area in the visited network and belong to the same session.

27. A wireless visited or home network according to claim 24, 25 or 26 wherein the policy node (PCRF) has the capability to communicate with a policy node (PCRF) of another wireless network to convey information needed for the relocation of a roaming user plane to transfer context to the other wireless network.

28. A wireless visited or home network according to claim 24, 25, 26 and 27, wherein the gateway node (GGSN) has the capability to communicate with a gateway node (GGSN) of another wireless network to exchange messages related to relocating context of a roaming user plane.

29. A suite of computer programs which, when executed on computing devices causes the devices to carry out the method as defined in any of the preceding method claims.

## Patentansprüche

1. Verfahren zum Roaming für eine Nutzereinrichtung (UE) von einem drahtlosen Heimatnetz (HPLMN A) in ein drahtloses Fremdnetz (V-PLMN), bei dem die Nutzereinrichtung eine Session mit etabliertem Nutzerebenen-Routing und Steuerebenen-Routing hat, das sowohl durch das Heimatnetz als auch durch das Fremdnetz verläuft;
welches Verfahren umfasst:
Verschieben der Nutzerebene zu einem Pfad, der das Heimatnetz ausschließt, aber das Fremdnetz enthält, indem Dienstinformationen für die Nutzereinrichtung zwischen einem Policy-Knoten (PLMN A PCRF), der die Dienstinformationen in dem Heimatnetz verwaltet, und einem Policy-Knoten (V-PCRF) in dem Fremdnetz überträgt, bei dem die SLeuerebene während der Verschiebung der Nutzerebene unverändert bleibt.

2. Verfahren nach Anspruch 1, bei dem ein Trigger in dem Fremdnetz (V-PLMN) die Verschiebungsschritte initiiert.

3. Verfahren nach einem der vorhergehenden Ansprüche, ferner mit einem Schritt zum selektiven Zurückkehren zum zuvor etablierten Routing, je nach Bedarf.

4. Verfahren nach einem der vorhergehenden Ansprüche, mit einem Policy-Prüfungsschritt vor der Übertragung, um zu prüfen, ob die Verschiebung gestattet ist.

5. Verfahren nach Anspruch 4, bei dem die Policy-Prüfung in dem Heimatnetz (HPLMN A) ausgeführt wird.

6. Verfahren nach Anspruch 5, bei dem eine anfängliche Policy-Prüfung durch das Fremdnetz (V-PLMN) ausgeführt wird.

7. Verfahren nach einem der vorhergehenden Ansprüche, bei dem die Nutzereinrichtungs-IP-Adresse in dem Heimatnetz (HPLMN A) trotz der Verschiebungsschritte unverändert bleibt.

8. Verfahren nach einem der vorhergehenden Ansprüche, bei dem die Verschiebungsschritte eine Verschicbungsaufforderungsstufe, eine Policy-Prüfungsstufe, eine Kontextinformationsübertragungsstufe und eine Nutzerebenenverschiebungsstufe enthalten.

9. Verfahren nach einem der vorhergehenden Ansprüche, bei dem die Verschiebungsschritte durch Signalisierung nur zwischen Kernnetzknoten in den Fremd- und Heimatnetzen ausgeführt werden und bei dem jedes Netz einen sogenannten Serving-Knoten (SGSN), einen sogenannten Gateway-Knoten (GGSN) und einen sogenannten Policy-Knoten (PCRF) enthält.

10. Verfahren nach Anspruch 8 und 9, bei dem die Verschiebungsaufforderungsstufe eine Mitteilung des Verschiebungserfordernisses von dem Fremd-Serving-Knoten (V-SGSN) an den Fremd-Gateway-Knoten (V-GGSN) enthält, an die sich eine Mitteilung der Aufforderungs-Policy-/Charging-Regeln von dem Fremd-Gateway-Knoten (V-GGSN) an den Fremd-Policy-Knoten (V-PCRF) und dann eine Verschiebungsaufforderung von dem Fremd-Policy-Knoten (V-PCRF) an den Heimat-Policy-Knoten (HPLMN A PCRF) anschließen.

11. Verfahren nach Anspruch 8 und 9 oder 8 und 10, bei dem die Policy-Prüfungsstufe durch den Heimat-Policy-Knoten (HPLMN A PCRF) ausgeführt wird.

12. Verfahren nach Anspruch 8 und einem der Ansprüche 9 bis 11, bei dem die Kontextinformationsübertragungsstufe eine Verschiebungsantwort von dem Heimat-Policy-Knoten (HPLMN A PCRF) an den Fremd-Policy-Knoten (V-PCRF), eine Kontextübertragungsaufforderung von dem Fremd-Policy-Knoten an den Heimat-Policy-Knoten (HPLMN A PCRF), eine Übertragung von Kontextdaten von dem Heimat-Policy-Knoten (HPLMN A PCRF) zu dem Fremd-Policy-Knoten (V-PCRF) und eine Lieferung von Policy-Daten von dem Fremd-Policy-Knoten (V-PCRF) an den Fremd-Gateway-Knoten (V-GGSN) enthält.

13. Verfahren nach Anspruch 8 und einem der Ansprüche 9 bis 12, bei dem die Nutzerebenenverschiebungsstufe eine Aufforderung zum Verschieben des Nutzerkontextes von dem Fremd-Gateway-Knoten (V-GGSN) an den Heimat-Gateway-Knoten (HPLMN A GGSN) und eine Antwort von dem Heimat-Gateway-Knoten (HPLMN A GGSN) an den Fremd-Gateway-Knoten (V-GGSN) enthält, an die sich eine Aufforderung zum Aktualisieren des Nutzerkontextes von dem Fremd-Gateway-Knoten (V-GGSN) an den Fremd-Serving-Knoten (V-SGSN) und eine Antwort von dem Fremd-Serving-Knoten (V-SGSN) an den Fremd-Gateway-Knoten (V-GGSN) anschließen.

14. Verfahren nach einem der vorhergehenden Ansprüche, bei dem die Nutzereinrichtung (UE A) eine erste Nutzereinrichtung ist und die Session zwischen der ersten Nutzereinrichtung (UE A) und einem Dienst oder einer zweiten Nutzereinrichtung (UE B) des Fremdnetzes (V-PLMN) stattfindet und beim Übertragungsschritt die Nutzerebenenverbindung hinweg von dem Heimatnetz der ersten Nutzereinrichtung komplett in das Fremdnetz übertragen wird.

15. Verfahren nach einem der vorhergehenden Ansprüche, bei dem die Nutzereinrichtung (UE A) eine erste Nutzereinrichtung ist und die Session zwischen der ersten Nutzereinrichtung (UE A) und einer zweiten Nutzereinrichtung (UE B) von demselben Heimatnetz stattfindet und der Übertragungsschritt das Übertragen der Nutzerebene hinweg von dem Heimatnetz komplett in das Fremdnetz enthält.

16. Verfahren nach einem der Ansprüche 1-13, bei dem das drahtlose Heimatnetz ein erstes drahtloses Heimatnetz ist und die Nutzereinrichtung (UE A) eine erste Nutzereinrichtung ist und die Session zwischen der ersten Nutzereinrichtung (UE A) und einer zweiten Nutzereinrichtung (UE B) von einem zweiten Heimatmetz stattfindet und beide Nutzereinrichtungen ein Roaming vollzichen.

17. Verfahren nach Anspruch 16, bei dem das etablierte Routing durch beide Heimatnetze verläuft und das Verfahren eine Verschiebung hinweg von dem zweiten Heimatnetz der zweiten Nutzereinrichtung (UE B) unter Verwendung von Verschiebungsschritten enthält, die den Verschiebungsschritten entsprechen, wie sie für die erste Nutzereinrichtung (UE A) in einem der vorhergehenden Ansprüche definiert sind.

18. Verfahren nach Anspruch 16 oder 17, bei dem bei einem ersten Übertragungsschritt die Nutzerebenenverbindung hinweg von dem ersten Heimatnetz übertragen wird, um nur durch das Fremdnetz und das zweite Heimatnetz zu verlaufen, und bei einem entsprechenden zweiten Übertragungsgchritt die Nutzerebenenverbindung hinweg von dem zweiten Heimatnetz komplett in das Fremdnetz übertragen wird.

19. Verfahren nach Anspruch 13 und 18, bei dem die Nutzerebenenverschiebungsstufe ferner eine Aufforderung von dem Gateway-Knoten des Heimatnetzes (HPLMN A GGSN) an den Gateway-Knoten des zweiten Heimatnetzes (HPLMN B GGSN) zum Aktualisieren einer Tunneladresse enthält, eine Schaffung eines neuen Tunnels zwischen dem Gateway-Knoten des zweiten Heimatnetzes und dem Gatewway-Knoten des Fremdnetzes (V-GGSN) und eine Antwort von dem Gateway-Knoten des zweiten Heimatnetzes (HPLMN B GGSN) an den Gateway-Knoten des ersten Heimatnetzes (HPLMN A GGSN), dass die Tunneladresse aktualisiert worden ist.

20. Verfahren nach einem der Ansprüche 15 bis 19, bei dem die Verschiebungsschritte der ersten Nutzereinrichtung (UE A) und der zweiten Nutzereinrichtunq (UE B) im Wesentlichen parallel stattfinden.

21. Verfahren nach Anspruch 2 und einem der Ansprüche 15 bis 20, bei dem der Trigger wirkt, wenn die ersten und zweiten Nutzereinrichtungen in derselben Session und innerhalb desselben Fremdnetzes sind.

22. Verfahren nach Anspruch 1, bei dem das Verfahren in dem drahtlosen Heimatnetz zum Roaming der Nutzereinrichtung (UE A) ausgeführt wird und die Verschiebung Schritte in dem Heimatnetz umfasst zum: Zuführen der Dienstinformationen zu dem Fremdnetz und Übertragen der Nutzerebenenverbindung hinweg von dem Heimatnetz.

23. Verfahren nach Anspruch 1, bei dem das Verfahren in dem drahtlosen Fremdnetz zum Roaming der Nutzereinrichtung (UE A) ausgeführt wird und die Verschiebung Schritte in dem Fremdnetz umfasst zum: Empfangen der Dienstinformationen von dem Heimatnetz und Übertragen der Nutzerebenenverbindung hinweg von dem Heimatnetz.

24. Drahtloses Heimatnetz, das ein Roaming für eine Nutzereinrichtung von dem drahtlosen Heimatnetz in ein drahtloses Fremdnetz gestattet, bei dem die Nutzereinrichtung eine Session mit etabliertem Nutzerebenen-Routing und Steuerebenen-Routing für die Nutzereinrichtung hat, das sowohl durch das Heimatnetz als auch durch das Fremdnetz verläuft, umfassend: ein Heimatnetzverschiebungsmittel, das betriebsfähig ist, um die Nutzerebene zu einem Pfad zu verschieben, der das Heimatnetz ausschließt, aber das Fremdnetz enthält, mit einem sogenannten Policy-Knoten (PCRF), der betriebsfähig ist, um Dienstinformationen für die UE dem Fremdnetz zuzuführen; und einem sogenannten Gateway-knoten (GGSN), der betriebsfähig ist, im die Nutzerebenenverbindung hinweg von dem Heimatnetz zu übertragen, bei dem die Steuerebene während der Verschiebung der Nutzerebene unverändert bleibt.

25. Drahtloses Fremdnetz (V-PLMN), das ein Roaming einer Nutzereinrichtung von einem drahtlosen Heimatnetz in das drahtlose Fremdnetz gestattet, bei dem die Nutzereinrichtung eine Session mit etabliertem Nutzerebenen-Routing und Steuerebenen-Routing hat, das sowohl durch das Heimatnetz als auch durch das Fremdnetz verläuft, umfassend: ein Fremdnetzverschiebungsmittel, das betriebsfähig ist, um die Nutzerebene zu einem Pfad zu verschieben, der das Heimatnetz ausschließt, aber das Fremdnetz enthält, mit einem sogenannten Policy-Knoten (V-PCRF), der betriebsfähig ist, um Informationen für die Nutzereinrichtung von dem Heimatnetz zu empfangen; und einem sogenannten Gateway-Knoten (V-GGSN), der betriebsfähig ist, um die Nutzerebenenverbindung hinweg von dem Heimatnetz zu übertragen, bei dem die Steuerebene während der Verschiebung der Nutzerebene unverändert bleibt.

26. Drahtloses Fremdnetz nach Anspruch 25, ferner mit einem Trigger, der ein verbessertes Roaming für die Nutzereinrichtung von dem drahtlosen Heimatnetz und eine zweite Nutzereinrichtung von dem drahtlosen Heimatnetz oder einem zweiten drahtlosen Heimatnetz triggert, bei dem der Trigger aktiviert wird, wenn beide Nutzereinrichtungen innerhalb derselben Dienstbereiches in dem Fremdnetz sind und zu derselben Session gehören.

27. Drahtloses Fremd- oder Heimatnetz nach Anspruch 24, 25 oder 26, bei dem der Policy-Knoten (PCRF) die Fähigkeit zum Kommunizieren mit einem Policy-Knoten (PCRF) eines anderen drahtlosen Netzes hat, um Informationen zu befördern, die für die Verschlebung einer Roaming-Nutzerebene benötigt werden, um einen Kontext zu dem anderen drahtlosen Netz zu übertragen.

28. Drahtlose Fremd- oder Heimatnetz nach Anspruch 24, 25, 26 und 27, bei dem der Gateway-Knoten (GGSN) die Fähigkeit zum Kommunizieren mit einem Gateway-Knoten (GGSN) eines anderen drahtlosen Netzes hat, um Mitteilungen in Bezug auf das Verschieben des Kontextes einer Roaming-Nutzerebene auszutauschen.

29. Folge von Computerprogrammen, die dann, wenn sie auf Rechenmaschinen ausgeführt werden, bewirken, dass die Maschinen das Verfahren ausführen, wie es in einem der vorhergehenden Verfahrensansprüche definiert ist.

## Revendications

1. Procédé d'itinérance pour un équipement utilisateur (UE) depuis un réseau de rattachement sans fil (HPLMN A) dans un réseau visité sans fil (V-PLMN), dans lequel l'équipement utilisateur a une session avec un routage de plan d'utilisateur établi et un routage de plan de commande qui traversent à la fois le réseau de rattachement et le réseau visité ;
le procédé comprenant :
la relocalisation du plan d'utilisateur vers un trajet qui exclut le réseau de rattachement, mais inclut le réseau visité en transférant des informations de service pour l'équipement utilisateur entre un noeud de politique (PLMN A PCRF) qui gère les informations de service dans le réseau de rattachement et un noeud de politique (V-PCRF) dans le réseau visité, dans lequel le plan de commande reste inchangé pendant la relocalisation du plan d'utilisateur.

2. Procédé selon la revendication 1, dans lequel un déclencheur dans le réseau visité (V-PLMN) initie les étapes de relocalisation.

3. Procédé selon l'une quelconque des revendications précédentes, incluant en outre une étape consistant à retourner sélectivement au routage établi précédent tel que requis.

4. Procédé selon l'une quelconque des revendications précédentes, incluant une étape de vérification de politique avant le transfert pour vérifier si la relocalisation est autorisée.

5. Procédé selon la revendication 4, dans lequel la vérification de politique est effectuée dans le réseau de rattachement (HPLMN A).

6. Procédé selon la revendication 5, dans lequel une vérification de politique initiale est effectuée par le réseau visité (V-PLMN).

7. Procédé selon l'une quelconque des revendications précédentes, dans lequel l'adresse IP de l'équipement utilisateur dans le réseau de rattachement (HPLMN A) reste inchangée en dépit des étapes de relocalisation.

8. Procédé selon l'une quelconque des revendications précédentes, dans lequel les étapes de relocalisation incluent une phase de demande de relocalisation, une phase de vérification de politique, une phase de transfert d'informations de contexte et une phase de relocalisation de plan d'utilisateur.

9. Procédé selon l'une quelconque des revendications précédentes, dans lequel les étapes de relocalisation sont effectuées en utilisant la signalisation entre des noeuds de coeur de réseau uniquement dans les réseaux visités et de rattachement et dans lequel chaque réseau inclut un noeud de desserte (SGSN), un noeud de transit (GGSN) et un noeud de politique (PCRF).

10. Procédé selon les revendications 8 et 9, dans lequel la phase de demande de relocalisation inclut un message de relocalisation requise du noeud de desserte visité (V-SGSN) au noeud de transit visité (V-GGSN) suivi d'un message de demande de politique/règles de taxation du noeud de transit visité (V-GGSN) au noeud de politique visité (V-PCRF) et ensuite une demande de relocalisation du noeud de politique visité (V-PCRF) au noeud de politique de rattachement (HPLMN A PCRF).

11. Procédé selon les revendications 8 et 9 ou 8 et 10, dans lequel la phase de vérification de politique est effectuée par le noeud de politique de rattachement (HPLMN A PCRF).

12. Procédé selon la revendication 8 et l'une quelconque des revendications 9 à 11, dans lequel la phase de transfert d'informations de contexte inclut une réponse de relocalisation du noeud de politique de rattachement (HPLMN A PCRF) au noeud de politique visité (V-PCRF), une demande de transfert de contexte du noeud de politique visité au noeud de politique de rattachement (HPLMN A PCRF), un transfert de données de contexte du noeud de politique de rattachement (HPLMN A PCRF) au noeud de politique visité (V-PCRF) et la fourniture de données de politique du noeud de politique visité (V-PCRF) au noeud de transit visité (V-GGSN).

13. Procédé selon l'une quelconque de la revendication 8 et l'une quelconque des revendications 9 à 12, dans lequel la phase de relocalisation de plan d'utilisateur inclut une demande de contexte de relocalisation d'utilisateur du noeud de transit visité (V-GGSN) au noeud de transit de rattachement (HPLMN A GGSN) et une réponse du noeud de transit de rattachement (HPLMN A GGSN) au noeud de transit visité (V-GGSN), suivie d'une demande de contexte de mise à jour d'utilisateur du noeud de transit visité (V-GGSN) au noeud de desserte visité (V-SGSN) et une réponse du noeud de desserte visité (V-SGSN) au noeud de transit visité (V-GGSN).

14. Procédé selon l'une quelconque des revendications précédentes, dans lequel l'équipement utilisateur (UE A) est un premier équipement utilisateur et la session est entre le premier équipement utilisateur (UE A) et un service ou un second équipement utilisateur (UE B) du réseau visité (V-PLMN) et dans lequel l'étape de transfert transfère la connexion de plan d'utilisateur loin du réseau de rattachement du premier équipement utilisateur pour qu'elle soit entièrement à l'intérieur du réseau visité.

15. Procédé selon l'une quelconque des revendications précédentes, dans lequel l'équipement utilisateur (UE A) est un premier équipement utilisateur et la session est entre le premier équipement utilisateur (UE A) et un second équipement utilisateur (UE B) du même réseau de rattachement et l'étape de transfert inclut le transfert du plan d'utilisateur loin du réseau de rattachement pour qu'il soit entièrement à l'intérieur du réseau visité.

16. Procédé selon l'une quelconque des revendications 1 à 13, dans lequel le réseau de rattachement sans fil est un premier réseau de rattachement sans fil et l'équipement utilisateur (UE A) est un premier équipement utilisateur et la session est entre le premier équipement utilisateur (UE A) et un second équipement utilisateur (UE B) d'un second réseau de rattachement et les deux équipements utilisateurs effectuent une itinérante.

17. Procédé selon la revendication 16, dans lequel le routage établi traverse les deux réseaux de rattachement et le procédé inclut la relocalisation loin du second réseau de rattachement du second équipement utilisateur (UE B) en utilisant des étapes de relocalisaticn correspondant aux étapes de relocalisation telles que définies pour le premier équipement utilisateur (UE A) dans l'une quelconque des revendications précédentes.

18. Procédé selon la revendication 16 ou 17, dans lequel une première étape de transfert transfère la connexion de plan d'utilisateur loin du premier réseau de rattachement pour qu'elle s'exécute dans le réseau visité et le second réseau de rattachement uniquement et une seconde étape de transfert correspondante transfère la connexion de plan d'utilisateur loin du second réseau de rattachement pour qu'elle soit entièrement à l'intérieur du réseau visité.

19. Procédé selon les revendications 13 et 18, dans lequel la phase de relocalisation de plan d'utilisateur inclut en outre une demande en provenance du noeud de transit du réseau de rattachement (HPLMN A GGSN) au noeud de transit du second réseau de rattachement (HPLMN B GGSN) pour mettre à jour une adresse de tunnel, la création d'un nouveau tunnel entre le noeud de transit du second réseau de rattachement et le noeud de transit du réseau visité (V-GGSN) et une réponse du noeud de transit du second réseau de rattachement (HPLMN B GGSN) au noeud de transit du premier réseau de rattachement (HPLMN A GGSN) selon laquelle l'adresse de tunnel a été mise à jour.

20. Procédé selon l'une quelconque des revendications 15 à 19, dans lequel les étapes de relocalisation du premier équipement utilisateur (UE A) et du second équipement utilisateur (UE B) ont lieu sensiblement en parallèle.

21. Procédé selon la revendication 2 et l'une quelconque des revendications 15 à 20, dans lequel le déclencheur agit lorsque les premier et second équipements utilisateurs sont dans la même session et à l'intérieur du même réseau visité.

22. Procédé selon la revendication 1, dans lequel le procédé est effectué dans le réseau de rattachement sans fil pour l'itinérance de l'équipement utilisateur (UE A) et la relocalisation comprend des étapes dans le réseau de rattachement pour : fournir les informations de service au réseau visité ; et transférer la connexion de plan d'utilisateur loin du réseau de rattachement.

23. Procédé selon la revendication 1, dans lequel le procédé est effectué dans le réseau visité sans fil pour l'itinérance de l'équipement utilisateur (UE A) et la relocalisation comprend des étapes dans le réseau visité pour : recevoir les informations de service en provenance du réseau de rattachement ; et transférer la connexion de plan d'utilisateur loin du réseau de rattachement.

24. Réseau de rattachement sans fil permettant l'itinérance pour un équipement utilisateur depuis le réseau de rattachement sans fil dans un réseau visité sans fil, dans lequel l'équipement utilisateur a une session avec un routage de plan d'utilisateur établi et un routage de plan de commande pour l'équipement utilisateur qui traverse à la fois le réseau de rattachement et le réseau visité, comprenant : des moyens de relocalisation de réseau de rattachement exploitables pour relocaliser le plan d'utilisateur vers un trajet qui exclut le réseau de rattachement, mais inclut le réseau visité, incluant un noeud de politique (PCRF) exploitable pour fournir des informations de service pour l'UE au réseau visité ; et un noeud de transit (GGSN) exploitable pour transférer la connexion de plan d'utilisateur loin du réseau de rattachement, dans lequel le plan de commande reste inchangé pendant la relocalisation du plan d'utilisateur.

25. Réseau visité sans fil (V-PLMN) permettant l'itinérance d'un équipement utilisateur depuis un réseau de rattachement sans fil dans le réseau visité sans fil, dans lequel l'équipement utilisateur a une session avec un routage de plan d'utilisateur établi et un routage de plan de commande qui traversent à la fois le réseau de rattachement et le réseau visité, comprenant : des moyens de relocalisation de réseau visité exploitables pour relocaliser le plan d'utilisateur vers un trajet qui exclut le réseau de rattachement, mais inclut le réseau visité, incluant : un noeud de politique (V-PCRF) exploitable pour recevoir des informations pour l'équipement utilisateur en provenance du réseau de rattachement ; et un noeud de transit (V-GGSN) exploitable pour transférer la connexion de plan d'utilisateur loin du réseau de rattachement, dans lequel le plan de commande reste inchangé pendant la relocalisation du plan d'utilisateur.

26. Réseau visité sans fil selon la revendication 25, comprenant en outre un déclencheur qui déclenche l'itinérance améliorée pour l'équipement utilisateur depuis le réseau de rattachement sans fil et un second équipement utilisateur depuis le réseau de rattachement sans fil ou un second réseau de rattachement sans fil, dans lequel le déclencheur est activé lorsque les deux équipements utilisateurs sont à l'intérieur de la même zone de service dans le réseau visité et appartiennent à la même session.

27. Réseau visité ou de rattachement sans fil selon la revendication 24, 25 ou 26, dans lequel le noeud de politique (PCRF) a la capacité de communiquer avec un noeud de politique (PCRF) d'un autre réseau sans fil pour acheminer des informations nécessaires pour que la relocalisation d'un plan d'utilisateur itinérant transfère un contexte à l'autre réseau sans fil.

28. Réseau visité ou de rattachement sans fil selon les revendications 24, 25, 26 et 27, dans lequel le noeud de transit (GGSN) a la capacité de communiquer avec un noeud de transit (GGSN) d'un autre réseau sans fil pour échanger des messages liés à la relocalisation de contexte d'un plan d'utilisateur itinérant.

29. Suite de programmes informatiques qui, lorsqu'exécutée sur des dispositifs informatiques, amène les dispositifs à effectuer le procédé tel que défini dans l'une quelconque des revendications du procédé précédentes.
